# FASCICULE DE BREVET EUROPEEN

(11) **EP 3 635 241 B1**
(45) Date de publication et mention de la délivrance du brevet: **07.07.2021**
(21) Numéro de dépôt: 18727010.3
(22) Date de dépôt: 25.05.2018
(51) Int. Cl.: F02M 65/00, G01M 15/09, G01M 15/04

(54) **SYSTÈME DE MAINTENANCE**
WARTUNGSSYSTEM
MAINTENANCE SYSTEM

(30) Priorité: 31.05.2017 FR 1754808
(43) Date de publication de la demande: 15.04.2020
(73) Titulaire: Delphi Technologies IP Limited, Saint Michael (BB)
(72) Inventeur: FABER, Guillaume, 41000 Blois (FR); BELSOEUR, St phane, 41330 Villefrancoeur (FR)
(74) Mandataire: Allain, Michel Jean Camille
(86) Numéro de dépôt international: PCT/EP2018/063842
(87) Numéro de publication internationale: WO 2018/219829

(56) Documents cités:
- DE-A1-102010 025 177
- FR-A1- 2 981 032
- US-A1- 2013 031 775

## Description

### DOMAINE TECHNIQUE

L'invention est relative à un système de maintenance et d'entretien du système d'injection de carburant et équipant des moteurs à combustion interne. L'invention concerne plus particulièrement un système portatif permettant des interventions sans démontage du système d'injection de carburant et un kit de maintenance comprenant un tel système.

### ARRIERE-PLAN TECHNOLOGIQUE DE L'INVENTION

La maintenance du système d'injection et équipant les moteurs à combustion interne est une opération couramment réalisée dans les garages et autres lieux d'entretien des véhicules. Cette opération peut être régulière ou occasionnelle parce qu'un dysfonctionnement est suspecté ou avéré et qu'un diagnostic est nécessaire préalablement à une éventuelle réparation.

Un système de maintenance d'un injecteur connu est montré dans le document FR 2 981 032.

L'opération de maintenance nécessite le contrôle des caractéristiques électriques et hydrauliques des actionneurs et de la pompe haute pression telles que la mesure de la résistance électrique des actionneurs ainsi que la pression générée dans le circuit hydraulique. Par ailleurs l'essai hydraulique de diagnostic du système d'injection ou des composants du système n'est pas possible directement sur le véhicule pour la gamme de pression compris entre 0 à 2850 bars avec des pics à 3000 bars. Un essai de fonctionnement en pression des composants du système d'injection est possible et cela nécessite de déposer les actionneurs et la pompe haute pression du véhicule c'est à dire les démonter et les tester sur banc afin de vérifier leur fonctionnement. Les différentes manipulations de l'opérateur pour vérifier la fonctionnalité des actionneurs hors du véhicule sont chronophages et donc couteuses.

A l'heure actuelle un opérateur en charge de la maintenance réalise les mesures électriques au moyen d'un multimètre standard.

Entre autres problèmes rencontrés durant la vie normale d'un véhicule, certains actionneurs s'obstruent partiellement par « laquage », c'est-à-dire par un dépôt de résidu.

Il n'existe pas actuellement de moyen permettant facilement le nettoyage des actionneurs bloqués ou communément dit « laqués ».

Il apparait donc qu'une demande importante du marché, et notamment des professionnels de la maintenance des véhicules, est de disposer d'un moyen fiable et facile à utiliser permettant de réaliser avec précision les contrôles nécessaires ainsi que les opérations de nettoyage. De plus, les professionnels entretiennent des systèmes d'injection de différents types et il serait inconcevable de dupliquer les outils de maintenance à chaque fois qu'un nouveau système serait mis sur le marché. Un système unique et adaptable est donc nécessaire. L'objet de la présente invention est de fournir une solution qui résout ces inconvénients.

### RESUME DE L'INVENTION

La présente invention résous les problèmes ci-dessus mentionnés en proposant un système de maintenance pour un système d'injection de carburant équipant un moteur de combustion interne. Le système d'injection de carburant définit un circuit hydraulique comprenant une pompe haute pression, une électrovanne, un capteur de pression, une électrovanne doseuse, une rampe commune et des injecteurs. Le système de maintenance comprend une unité de commande manuelle reliée à une unité hydraulique. L'unité hydraulique peut être insérée dans le circuit hydraulique du système d'injection de carburant. L'unité hydraulique comprend une électrovanne de test et un capteur de pression de test montés dans un corps pourvu d'une bouche d'entrée, d'une bouche de sortie et d'une bouche de fuite. En utilisation l'électrovanne de test génère une fuite artificielle comprise entre un volume de fuite de carburant minimum et un volume de fuite maximum. En utilisation le capteur de pression de test mesure la pression dans le corps de l'unité hydraulique et génère un signal indicatif de la valeur de pression lue, ledit signal étant envoyé à l'unité de commande manuelle.

L'unité de commande manuelle comprend un boitier, au moins trois câbles électriques terminés chacun par un connecteur spécifique apte à être connecté sur l'électrovanne du système d'injection et sur l'électrovanne doseuse du système d'injection. Le système de maintenance mesure les résistances électriques de l'électrovanne et de l'électrovanne doseuse.

De plus l'unité de commande manuelle est prévue pour exécuter plusieurs opérations selon un cycle de mesures qui comprend des mesures électriques et des mesures hydrauliques. Le cycle de mesures sélectionné s'interrompt au terme de chacune des opérations du cycle de mesures, l'opération suivante étant déclenchée par une action sur un bouton du boitier de sorte que le cycle de mesures sélectionné puisse être interrompu dès qu'une mesure a permis d'identifier un défaut du système d'injection de carburant.

De plus le système de maintenance est déplaçable et portable d'une main, facilement manipulable et utilisable de sorte à être emmené par un opérateur auprès d'un véhicule dont un le système d'injection de carburant doit être vérifié.

De plus un adaptateur spécifique est connecté au bout de la bouche d'entrée ou de la bouche de sortie du corps. L'adaptateur spécifique peut être déconnecté et remplacé par un autre adaptateur spécifique à un autre actionneur ou à une autre pompe haute pression de sorte qu'une même unité de commande puisse être utilisée pour la maintenance d'une pluralité de système d'injection de carburant.

De plus un kit de maintenance du système d'injection de carburant pilotés par un unité de commande manuelle et prévus pour équiper des moteurs diesel ou essence. Le kit comprend un système de maintenance et au moins un adaptateur spécifique supplémentaire de sorte que l'unité de commande puisse être utilisée avec au moins deux modèles différents de système d'injection de carburant.

De plus le kit de maintenance comprend de plus un kit de nettoyage ayant un fluide de nettoyage, au moins deux seringues, un support adapté pour être agencé complémentairement sur l'électrovanne doseuse.

Une méthode du système de maintenance d'un système d'injection de carburant piloté par l'unité de commande manuelle équipant un moteur à combustion interne comprend les étapes :
- connecter l'unité de commande manuelle à l'unité hydraulique, à la pompe haute pression et aux actionneurs et au capteur de pression du système d'injection de carburant ;
- réaliser la mesure électrique de l'électrovanne et de l'électrovanne doseuse,
- réaliser la mesure de pression de la pompe haute pression et la mesure du débit et de pression du système d'injection de carburant. Les étapes s'enchaînent selon un cycle de mesures déterminé, le système d'injection de carburant restant en place sur le moteur à combustion interne. La méthode du système de maintenance décrite comprend de plus une étape de nettoyage de l'électrovanne doseuse au cours de laquelle le fluide de nettoyage circule dans l'électrovanne doseuse.

### BREVE DESCRIPTION DES DESSINS

D'autres caractéristiques, buts et avantages de l'invention apparaîtront à la lecture de la description détaillée qui va suivre, et en regard des figures annexées, donnés à titre d'exemple non limitatif:
- La figure 1 est une vue représentant un système de maintenance pour le diagnostic et l'analyse de pannes d'un système d'injection de carburant en cours d'utilisation par un opérateur.
- La figure 2 est un logigramme des étapes d'un cycle de mesures réalisé par le système de maintenance.
- La figure 3 est une vue représentant le montage de la mesure électrique des actionneurs réalisée par le système de maintenance.
- La figure 4 est un schéma fonctionnel de la mesure de pression de la pompe haute pression.
- La figure 5 est une vue éclatée de l'unité hydraulique du système de maintenance.
- La figure 6 est une vue en perspective de l'unité hydraulique du système de maintenance.
- La figure 7 est un schéma fonctionnel de la mesure de débit et de pression de système d'injection de carburant de type A.
- La figure 8 est un schéma fonctionnel de la mesure de débit et de pression de système d'injection de carburant de type B.
- La figure 9 est un schéma fonctionnel de l'opération de nettoyage d'une électrovanne doseuse.
- La figure 10 est une vue du système de nettoyage de l'électrovanne doseuse.

### DESCRIPTION DES MODES DE REALISATION PREFERES

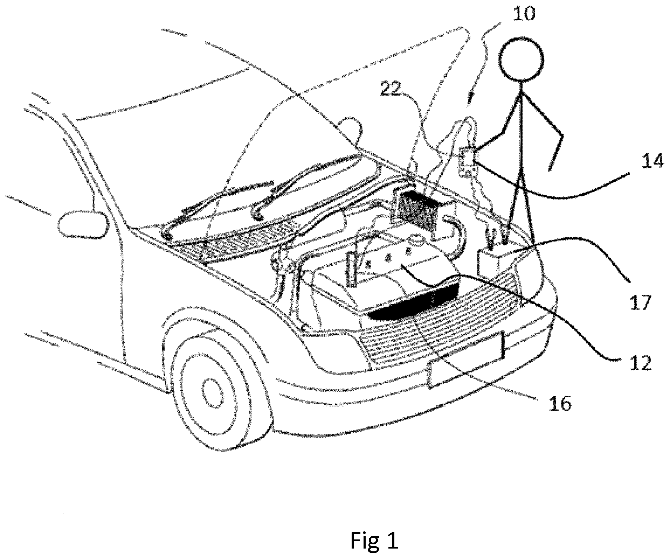

L'invention est maintenant décrite en référence aux figures en annexe. La figure 1 schématise un opérateur menant à l'aide d'un système de maintenance 10 des opérations de maintenance sur un système d'injection 12 de carburant d'un moteur à combustion interne de véhicule. Le système de maintenance 10 comprend une unité de commande 14 manuelle reliée à une unité hydraulique 16. L'unité de commande 14 est un boitier portatif. L'unité de commande 14 peut être tenue à la main par l'opérateur ou être posée sur le véhicule, le système d'injection 12 de carburant étant en place sur le moteur. L'unité de commande 14 est électriquement alimenté par une batterie 17 externe qui peut être la batterie 17 du véhicule.

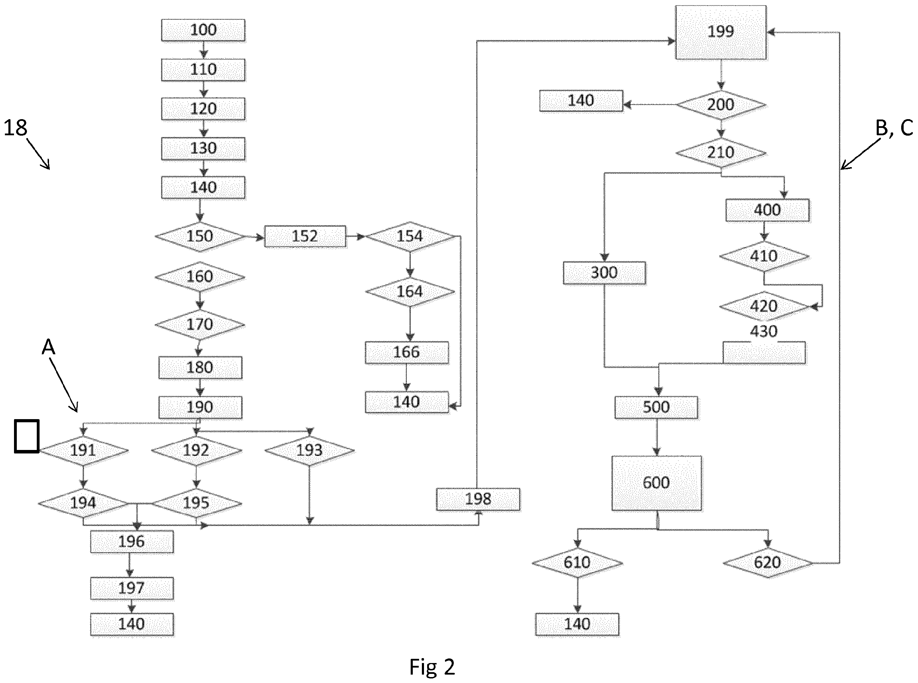

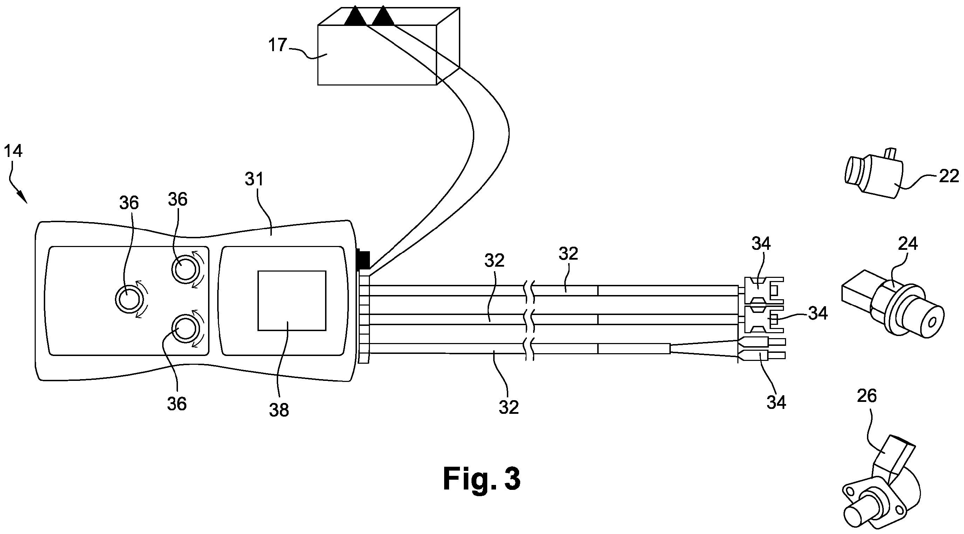

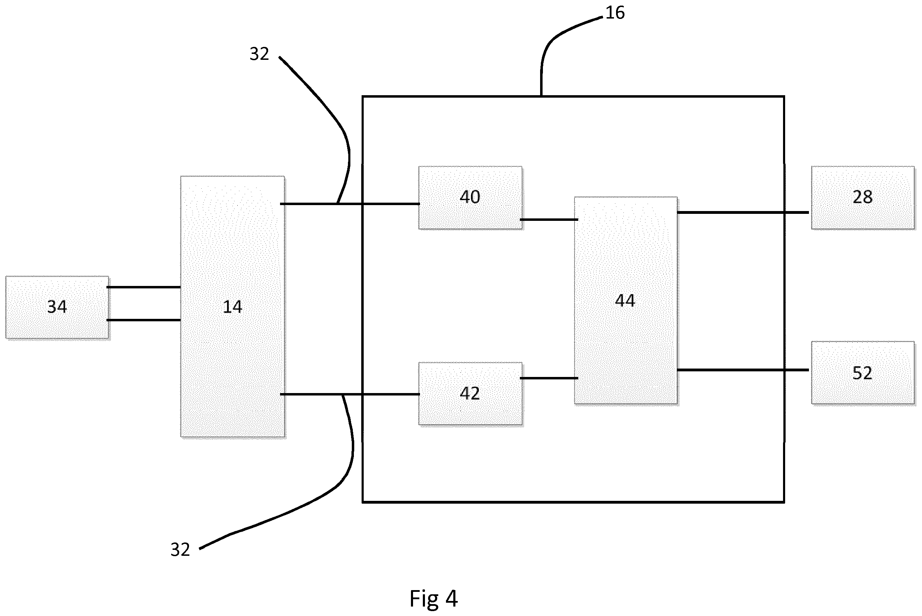

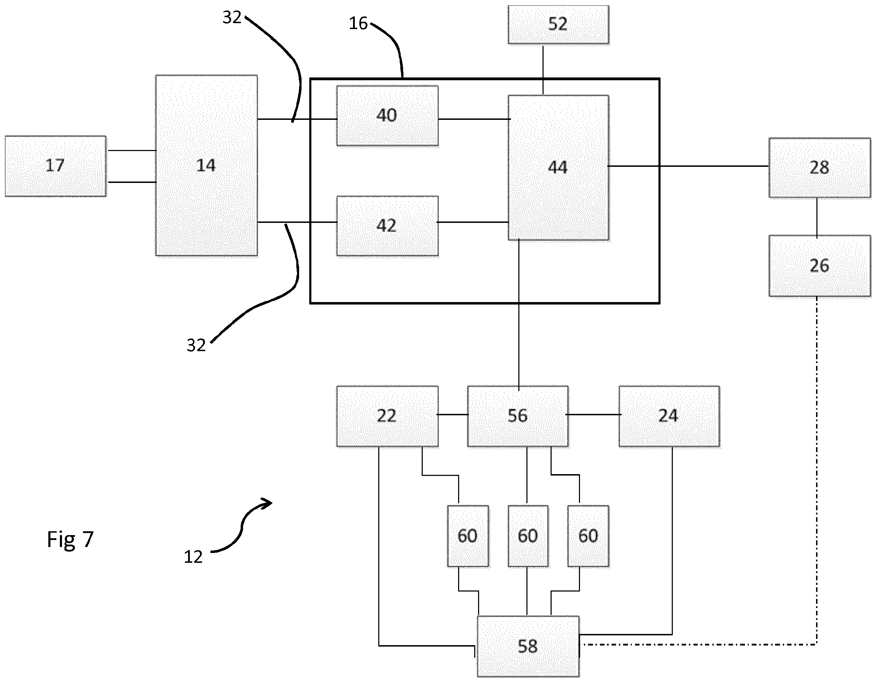

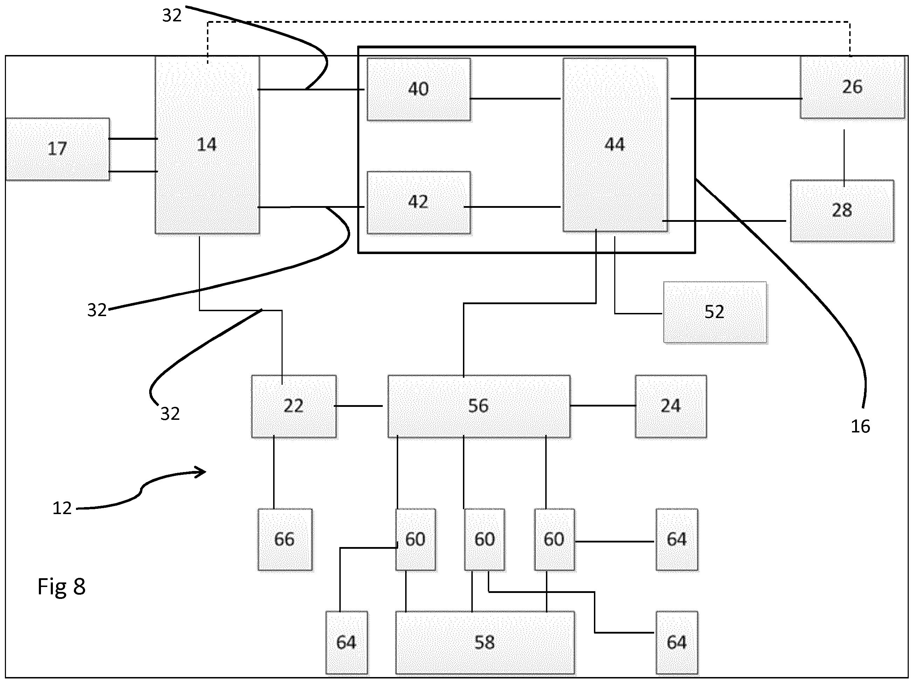

La figure **2** représente le logigramme qui détaille les étapes d'un cycle de mesures 18 électriques et hydrauliques qui sont mémorisées. Comme décrit dans la figure 1, les étapes du cycle de mesures 18 peuvent être exécutées par l'unité de commande 14. Chaque étape de mesure du cycle de mesures 18 nécessite un branchement spécifique qui sera détaillé ultérieurement. Le logigramme du cycle de mesures 18 se décompose en trois grandes étapes de mesures qui sont :
A) faire une mesure électrique des actionneurs du système d'injection que sont une électrovanne haute pression 22 appelée aussi électrovanne 22, un capteur de pression 24 et une électrovanne doseuse haute pression 26 appelée aussi électrovanne doseuse 26 comme décrit dans la figure 3,
B) faire une mesure de pression hydraulique d'une pompe haute pression 28 comme décrit dans la figure 4,
C) faire une mesure de débit et de pression hydraulique de l'électrovanne 22, du capteur de pression 24 et de la électrovanne doseuse 26 du système d'injection 12 comme décrit dans les figures 7 et 8. Les étapes B et C peuvent être exécutées consécutivement en commençant par l'étape B puis l'étape C ou bien l'opérateur choisit une des deux étapes B, C ainsi que l'ordre d'exécution des étapes B et C.

Dans une alternative au cycle de mesures 18 qui n'est pas représenté dans le logigramme de la figure 2, le cycle de mesures 18 peut intégrer une étape de nettoyage de la électrovanne doseuse 26 si l'électrovanne doseuse 26 est « laqué » ce qui veut dire que l'électrovanne doseuse 26 est encrassée.

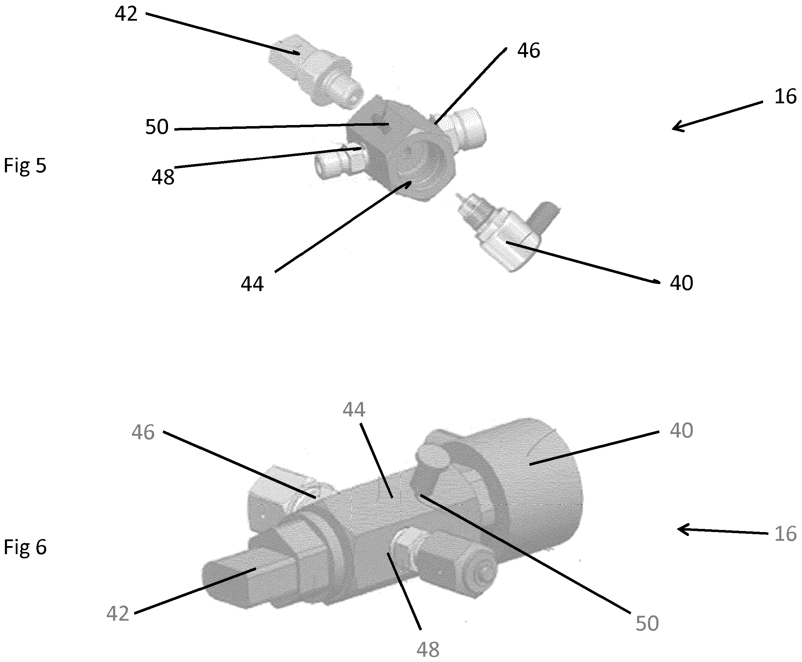

Nous allons décrire dans le détail le logigramme du cycle de mesures 18 selon la figure 2 et à l'aide des figures 3 à 8:
- 100 : mettre sous tension de l'unité de commande 14
- 110 : afficher le menu de démarrage sur un écran 38 de l'unité de commande 14
- 120 : mesurer la tension aux bornes de l'unité de commande 14
- 130 : attendre 2 secondes
- 140 : revenir au menu principal qui s'affiche sur l'écran 38 de l'unité de commande 14
- 150 : choisir le menu de sélection du son,
- 152 : afficher le menu « son »,
- 154 : choisir d'activer ou de désactiver le Son,
- 160 : choisir le menu de sélection de la langue du menu,
- 162 : afficher le menu des langues disponibles,
- 164 : choisir une langue différente,
- 166 : charger les menus avec la nouvelle langue choisie,
- 140 : revenir au menu principal sur l'écran 38 de l'unité de commande,
- 170 : choisir le menu de démarrage,
- 180 : afficher l'information « vérification des connexions » sur l'écran 38,
- 190 : afficher l'information « vérification de la connexion et de la résistance » sur l'écran 38,
- 191 : vérifier la connexion de l'électrovanne doseuse 26,
- 192 : vérifier la connexion de l'électrovanne 22,
- 193 : vérifier la connexion du capteur de pression 24,
- 194 : vérifier la résistance électrique de la bobine de l'électrovanne 22,
- 195 : vérifier la résistance électrique de la bobine de l'électrovanne doseuse 26,
- 196 : afficher l'information Défaut bobine sur l'écran 38
- 197 : émettre un bip sonore représentatif du défaut bobine,
- 140 : Revenir au menu principal sur l'écran 38 de l'unité de commande,
- 198 : émettre un bip sonore représentatif du bon fonctionnement, électrique des actionneurs 22, 26 et du capteur de pression 24,
- 199 : afficher les résultats des vérifications de la connexion des actionneurs 22, 24, 26 ainsi que les valeurs de résistance électrique des actionneurs 22,26 en fonction des réglages des actionneurs 22, 26
- 200 : afficher l'information sur l'écran 38 de la commande « Annuler » pour indiquer la possibilité d'annuler le cycle de mesures par l'opérateur,
- 140 : Revenir au menu principal sur l'écran 38 de l'unité de commande,
- 210 : afficher l'information sur l'écran 38 de la commande « Commencer » pour indiquer que le cycle suivant peut être démarré par l'opérateur,
- 300 : afficher le résultat de la mesure de pression faite par le capteur de pression 24 ainsi que les réglages que l'opérateur va afficher en pourcentage de la pression maximum des actionneurs 22, 26 afin que l'unité de commande 14 envoie la commande aux actionneurs 22, 26,
- 400 : activer le signal PWM à l'aide du boitier 31 de l'unité de commande 14,
- 410 : activer un des boutons 36 de l'unité de commande 14 suivant les menus affichés,
- 420 : affichage du temps du signal PWM qui est déjà préréglé,
- 430 : arrêter le signal PWM,
- 500 : émettre un bip sonore,
- 600 : fin de la mesure: affichage de la pression lue sur l'écran 38 du boitier 31 par le capteur de pression 24 ainsi que les valeurs en pourcentage de la pression maximum de fonctionnement des actionneurs 22,26 qui ont été choisis par l'opérateur,
- 610 : sélectionner la commande « Annuler » qui est affichée à l'écran 38 de l'information
- 620 : sélectionner la commande « recommencer » qui est affiché à l'écran 38 de l'information
- 140 : retour au menu principal sur l'écran 38 de l'unité de commande.
Le logigramme du cycle de mesures 18 va être décrit pour chaque mesure du point de vue du mode opératoire à réaliser par l'opérateur.

Comme décrit dans la figure 3, l'étape A correspond à la mesure électrique 20 des actionneurs 22, 26 et du capteur de pression 24 du système d'injection. L'étape A correspond aux étapes comprises entre l'étape 180 et l'étape 199 de la figure 2. L'objectif de l'étape A est de vérifier que les caractéristiques électriques des actionneurs 22, 26 du système d'injection de carburant sont conformes aux valeurs attendues par l'opérateur. La première étape de mesure du cycle de mesures 18 est une mesure électrique 20. L'unité de commande 14 manuelle comprend un boitier 31, au moins trois câbles électriques 32 terminés chacun par un connecteur 34 spécifique à chaque actionneur 22, 26 et au capteur de pression 24. L'unité de commande 14 est branchée à la batterie 17 du véhicule et l'unité de commande 14 vérifie la tension qui est à ses bornes. Le boitier 31 comprend des boutons 36, l'écran 38 d'affichage. L'opérateur branche les connecteurs 34 de l'unité de commande 14 sur l'électrovanne 22, sur le capteur de pression 24, et sur l'électrovanne doseuse 22 si elle existe. L'électrovanne 22 est aussi appelée aussi communément HPV 22 du terme anglais « high pressure valve ». Le capteur de pression 24 est aussi appelé communément HPS 24 du terme anglais « high pressure sensor». L'électrovanne doseuse 26 est aussi appelé communément IMV 26 du terme anglais « Inlet Metering Valve ». La mesure électrique 18 consiste en une vérification des connections des actionneurs 22, 24, 26 et en une mesure de la résistance électrique 18. Cette mesure de résistance électrique permettra d'ajuster la commande PWM suivant la caractéristique électrique de l'actionneur 22, 26. Tout d'abord l'opérateur sélectionne dans le menu affiché à l'écran 38 la commande « connexion et résistance », ce qui correspond aux étapes 180 à 199 du logigramme de la figure 2. L'unité de commande 14 vérifie que les actionneurs 22, 26 et le capteur de pression 24 sont bien connectés. Ensuite si tout est bien connecté alors l'opérateur va appuyer sur un des boutons 36 qui démarre la mesure des résistances électriques de l'électrovanne 22, et de l'électrovanne doseuse 26. La lecture des mesures électriques 18 se fait directement sur l'écran 38 du boitier. Si la résistance électrique 20 est hors tolérance c'est-à-dire hors de l'intervalle de mesure compris entre une valeur minimum et une valeur maximum de la résistance électrique des actionneurs 22,26 du système d'injection de carburant à dépanner, l'écran 38 affiche un message défaut à l'écran 38 du boitier 31. Si la résistance électrique 20 est dans l'intervalle de tolérance de la résistance électrique 20 de l'actuateur 22, 26 du système d'injection de carburant alors l'opérateur peut passer à l'étape suivante, c'est à dire soit à l'étape B de la mesure de pression de la pompe haute pression 28 ou à l'étape C de la mesure de débit et de pression du système d'injection.

Comme représentée dans les figures 4, 5 et 6, l'étape B va être décrite. L'étape B correspond à la mesure de pression de la pompe haute pression 28. L'étape B correspond aux étapes comprises entre l'étape 210 et l'étape 600 de la figure 2. L'étape B correspond à la mesure de pression de la pompe haute pression 28 qui est réalisée avec l'unité de commande 14 et l'unité hydraulique 16 du système de maintenance 10. L'objectif de cette mesure de pression hydraulique est de vérifier la fonctionnalité de la pompe haute pression 28. Comme décrit dans la figure 4, le schéma fonctionnel de la mesure de la pression comporte l'unité de commande 14 qui est relié à l'unité hydraulique 16 et à une source de tension, ici la batterie 17 du véhicule. Comme représentée dans les figures 4, 5 et 6, l'unité hydraulique 16 comprend une électrovanne de test 40 et un capteur de pression de test 42 montés dans un corps 44 pourvu d'une bouche d'entrée 46, qui comporte un raccord Haute Pression de type M20xl,5, d'une bouche de sortie 48 qui comporte un raccord Haute Pression M14xl,5, et d'une bouche de fuite 50 qui peut comprendre une canule. En fonction des systèmes d'injection de carburant essence ou diesel, la bouche d'entrée 46 et la bouche de sortie 48 peuvent nécessiter un adaptateur spécifique 68 pour se connecter à une entrée spécifique de la pompe haute pression 28. La bouche de sortie 48 est fermée dans l'étape B. L'unité hydraulique 16 est reliée à un récipient de carburant 52 relié par un premier tuyau à la canule qui est montée sur la bouche de fuite 50. L'unité hydraulique 16 est reliée hydrauliquement à la pompe haute pression 28 par un deuxième tuyau à la bouche d'entrée 46 du corps. L'électrovanne de test 40 et le capteur de pression de test 42 sont reliés électriquement à l'unité de commande 14. Le mode opératoire de l'étape B de la mesure de pression va être décrit plus précisément. La mesure de pression de la pompe haute pression 28 se déroule de la manière suivante :
b10) brancher électriquement l'unité de commande 14 à une source de tension, par exemple la batterie 17 du véhicule,
b20) relier le récipient de carburant 52 à la bouche de fuite 50 par l'intermédiaire du premier tuyau et d'une canule,
b30) relier électriquement l'unité de commande 14 à l'électrovanne de test 40 et au capteur de pression de test 42,
b40) activer le démarreur 54 du véhicule à vérifier pendant environ 5 secondes pour générer la pression en provenance de la pompe haute pression 28,
b50) appliquer une consigne de pression hydraulique à atteindre qui est réalisé par l'opérateur et qui est affiché sur l'écran 38 en utilisant le bouton 36 du boitier, ce qui génère un courant permettant d'activer la bobine de l'électrovanne de test 40, l'électrovanne de test 40 générant une fuite de carburant dans le corps 44 qui est récupéré dans le récipient de carburant 52,
b60) lire le seuil de pression hydraulique atteint sur l'écran 38 de l'unité de commande 14, la pression hydraulique étant mesurée dans le corps 44 par le capteur de pression de test 42,
b70) arrêter la mesure de la pression de la pompe haute pression 28,
b80) lire le seuil de pression hydraulique sur l'écran 38.
Le résultat de la mesure se fait par deux caractéristiques qui sont analysées par l'opérateur :
- la pression hydraulique lue sur l'écran 38 à l'étape b60 du mode opératoire de la mesure de pression,
- la présence d'un volume de carburant récupéré dans le récipient de carburant 52 à l'étape b80 confirme l'excédent capacitaire de la pompe haute pression 28.
Si la pression lue à l'étape b60 ne correspond pas au seuil de pression appliqué par l'opérateur à l'étape b50, alors la pompe haute pression 28 est défectueuse. L'opérateur change la pompe haute pression 28 défectueuse par une nouvelle pompe haute pression 28 fonctionnelle et en bonne état. Si la pression lue à l'étape b60 correspond au seuil de pression appliquée par l'opérateur à l'étape b50, alors la pompe haute pression 28 est fonctionnelle. Alors l'opérateur peut continuer le cycle de mesures 18 et passer à l'étape C qui est l'étape de mesure de débit et de pression.

Comme représenté et décrit dans les figures 7 et 8, l'étape C correspond à la mesure in situ dans le véhicule du débit et de la pression de l'électrovanne 22, du capteur de pression 24 et de l'électrovanne doseuse 26 si elle existe dans le système d'injection de carburant 12. L'étape C correspond aux étapes comprises entre l'étape 210 et l'étape 600 de la figure 2, ces étapes étant similaires à l'étape B. La mesure du débit se fait par la mesure du volume de carburant récupéré pendant un temps défini par le système de maintenance, à différents endroits du système d'injection qui va être décrit dans ce qui suit.

Comme représenté dans la figure 7, le schéma fonctionnel de la mesure de débit et de pression concernent les systèmes d'injection de type A. Le type A correspond au système d'injection qui utilise un outil de diagnostic 62 connecté à un calculateur 58.

Comme représenté dans la figure 7, l'étape C correspond à la mesure de débit et de pression hydraulique du système d'injection de carburant 12 qui est réalisée avec l'unité de commande 14 et l'unité hydraulique 16 du système de maintenance 10. L'unité hydraulique 16 du système de maintenance est intercalée entre la pompe haute pression 28 et l'entrée de la rampe commune 56 du système d'injection de carburant 12. L'objectif de la mesure de l'étape C est de vérifier si les actuateurs 22, 26 et le capteur de pression 24 du système de carburant 12 sont fonctionnels. L'unité hydraulique 16 comprend le corps 44 sur lequel sont montés l'électrovanne de test 40 et le capteur de pression de test 42. Le corps 44 de l'unité hydraulique est relié par la canule et par le premier tuyau au récipient de carburant 52. Le corps 44 est relié hydrauliquement à la pompe haute pression 28 par l'intermédiaire du deuxième tuyau. L'unité de commande 14 est relié électriquement par le câble 32 à l'électrovanne de test 40 et au capteur de pression de test 42. De plus en fonction des systèmes d'injection de carburant essence ou diesel, la bouche d'entrée 46 et la bouche de sortie 48 du corps 44 peuvent nécessiter l'adaptateur spécifique 68 pour se connecter à une entrée spécifique de la pompe haute pression 28 ou bien pour se connecter à une entrée de la rampe commune 56. Comme décrit dans la figure 7, le calculateur 58 du système d'injection de carburant 10 est connecté électriquement à l'électrovanne 22, au capteur de pression 24, aux injecteurs 60 du système d'injection de carburant 10 et à l'électrovanne doseuse 26 si il y en a une dans la pompe haute pression 28.

L'étape C de la mesure de débit et de pression hydraulique pour les systèmes d'injection de carburant de type A va être décrite plus précisément. La mesure de débit et de pression se déroule de la manière suivante:
c10) brancher l'outil de diagnostic 62 appelé aussi « OBD » qui signifie en anglais « On Board Diagnostic » et vérifier si il y a des codes défauts stockés sur le calculateur 58 appelé aussi ECU qui signifie en anglais « electronic control unit » du système d'injection de carburant 12. S'il y a des défauts affichés alors l'opérateur remplacera l'actionneur 22, 26 ou les deux actionneurs 22,26 défectueux identifiés par l'outil de diagnostic 62.
c20) activer via l'outil de diagnostic 62 le cycle de fonctionnement appelé « Capacité pompe » présent dans le calculateur 58, lors de ce cycle de fonctionnement le moteur du véhicule est au ralenti puis le calculateur 58 pilote les actionneurs 22,26, le capteur de pression 24 et les injecteurs 60,
c30) appliquer la consigne de pression hydraulique à atteindre à l'aide du boitier 31 de l'unité de commande 14 du système de maintenance 10 pendant une durée définie par le cycle « Capacité Pompe » de l'outil de diagnostic 62, le cycle se terminant par l'arrêt du moteur du véhicule,
c40) lire la pression affichée sur l'écran 38, valeur de la pression mesurée par le capteur de pression de test 42 et envoyée à l'unité de commande 14,
c50) collecter et lire le volume de carburant récupéré dans le récipient de carburant 52.

Le résultat de la mesure du débit et de la pression hydraulique de l'étape C se fait par deux caractéristiques qui sont analysées par l'opérateur :
- la pression hydraulique lue sur l'écran 38 à l'étape c60,
- le volume de carburant récupérée dans le récipient de carburant 52 à l'étape c50.

Si la source de pression c'est à dire la pompe haute pression 28 ne compense pas la fuite artificielle générée par l'unité de commande 14 en ouvrant l'électrovanne de test 40 alors cela veut dire que la défaillance provient soit de la source de pression donc la pompe haute pression 28, soit de l'électrovanne 22 ou des injecteurs 60 qui laissent retourner le carburant vers le réservoir de carburant du véhicule. Concrètement dans ce cas-là la pression qui est lue sur l'écran 38 est inférieure à la valeur de pression appliquée par l'opérateur à l'aide de l'unité de commande 14 manuelle.

Si de plus le volume collecté dans le récipient de carburant 52 pendant le cycle de « Capacité pompe » piloté par le calculateur 58 et activé par l'outil de diagnostic 62 est inférieur à l'intervalle de tolérance de la valeur du volume connue pour le système d'injection de carburant 12, alors c'est que le système d'injection de carburant 62 est sous capacitaire.

Si par contre le volume récupéré dans le récipient de carburant 52 est dans l'intervalle de tolérance du volume de carburant attendue mais que la pression lue est inférieur à la valeur de la pression appliquée par l'unité de commande 14 alors cela veut dire que l'électrovanne 22 ou les injecteurs 60 ou les deux à la fois l'électrovanne 22 et un des injecteurs 60 sont défaillants.

Comme représenté dans la figure 8, le schéma fonctionnel de la mesure de débit et de pression concernent les systèmes d'injection de carburant de type B. Le type B correspond aux systèmes d'injection qui ne sont pas des systèmes d'injection de type A, c'est-à-dire les systèmes d'injection qui n'utilisent pas l'outil de diagnostic 62. Comme représenté dans la figure 8, l'étape C correspond à la mesure de débit et de pression hydraulique du système d'injection de carburant 12 qui est réalisée avec l'unité de commande 14 et l'unité hydraulique 16 du système de maintenance 10. L'unité hydraulique 16 du système de maintenance 10 est intercalée entre la pompe haute pression 28 et l'entrée de la rampe commune 56 du système d'injection de carburant 12. L'objectif de la mesure de l'étape C est de vérifier si les actuateurs 22, 26 du système de carburant 12 sont fonctionnels.
L'unité hydraulique 16 comprend le corps 44 sur lequel sont montés l'électrovanne de test 40 et le capteur de pression de test 42. Le corps 44 de l'unité hydraulique est relié par le premier tuyau et la canule au récipient de carburant 52. Le corps 44 est relié hydrauliquement à la pompe haute pression 28 par l'intermédiaire du deuxième tuyau. L'unité de commande 14 est relié électriquement par un câble à l'électrovanne de test 40, au capteur de pression de test 42, à l'électrovanne 22 et à l'électrovanne doseuse 26 si elle existe dans le système d'injection de carburant. Comme décrit dans la figure 8, le calculateur 58 du système d'injection de carburant 12 est connecté électriquement au capteur de pression 24, aux injecteurs 60 du système d'injection de carburant 12. Chaque injecteur 60 est relié à un récipient de carburant 64 et l'électrovanne 22 est relié à un récipient de carburant 66.

L'étape C de la mesure de débit et de pression hydraulique pour les systèmes d'injection de carburant de type B va être décrite plus précisément. La mesure de débit et de pression se déroule de la manière suivante:
c100) connecter l'unité de commande 14 manuelle à l'électrovanne de test 40, au capteur de pression de test 42, à l'électrovanne 22 et à l'électrovanne doseuse 26,
c110) laisser connecter le calculateur 58 aux injecteurs 60 et au capteur de pression 24,
c120) relier l'électrovanne de test 40 à un récipient de carburant 52 par le premier tuyau, chaque injecteur 60 à un récipient de carburant 62 par un troisième tuyau et l'électrovanne 22 à un récipient de carburant 64 par un quatrième tuyau,
c130) appliquer une pression hydraulique à atteindre à l'aide de l'unité de commande 14 qui prend la main sur le calculateur 58 qui se met en mode défaut c'est-à-dire en mode débit réduit et ainsi l'électrovanne 22 va être forcé en fermeture par l'unité de commande 14,
c140) lire la pression affichée sur l'écran 38 du boitier 31 dont la valeur de la pression est envoyé à l'unité de commande 14 par le capteur de pression de test 42,
c150) collecter et lire le volume de carburant récupéré dans les récipients 52, 62, 64.

Le résultat de la mesure du débit et de la pression hydraulique de l'étape C se fait par deux caractéristiques qui sont analysées par l'opérateur :
- la pression hydraulique lue sur l'écran 38 à l'étape c60,
- le volume de carburant récupérée dans les récipients de carburant 52, 62, 64 à l'étape c70.

Si la consigne en pression hydraulique envoyé par l'unité de commande 14 sur l'unité hydraulique 16 n'est pas atteinte ou n'est pas régulée par l'électrovanne de test 40 alors le système d'injection de carburant 12 a une défaillance sur la pompe haute pression 28, ou sur l'électrovanne 22 ou alors sur l'électrovanne doseuse 26 de la pompe si il y en a une. Si le volume collectée dans le récipient de carburant 52 de l'électrovanne de test 40 est inférieur à la valeur connue et attendue pour la valeur de pression appliquée par l'opérateur alors cela veut dire que le système d'injection de carburant 12 est sous capacitaire. Alors l'opérateur analyse les valeurs des volumes de carburant mesurés dans les récipients 62, 64. Si il y a des valeurs de volume récupéré de carburant mesurées qui sont supérieures aux valeurs attendues pour l'électrovanne 22 ou pour les injecteurs 60 ou bien à la fois pour l'électrovanne 22 et les injecteurs 60, cela veut dire que l'électrovanne 22 ou les injecteurs 60 ou les deux à la fois consomment plus que la valeur attendue pour l'électrovanne 22 ou pour les injecteurs 60 ou bien à la fois pour l'électrovanne 22 et les injecteurs 60. Cela indique une défaillance que l'opérateur va réparer.

Dans certaines configurations de systèmes d'injection de carburant 12, l'unité hydraulique 16 peut être agencée de sorte à ce que le flux de carburant arrive par la bouche de sortie 48 et ressorte par la bouche d'entrée 46. Le fonctionnement de l'unité hydraulique 16 dans le cycle de mesures 18 du système de maintenance 10 reste identique.

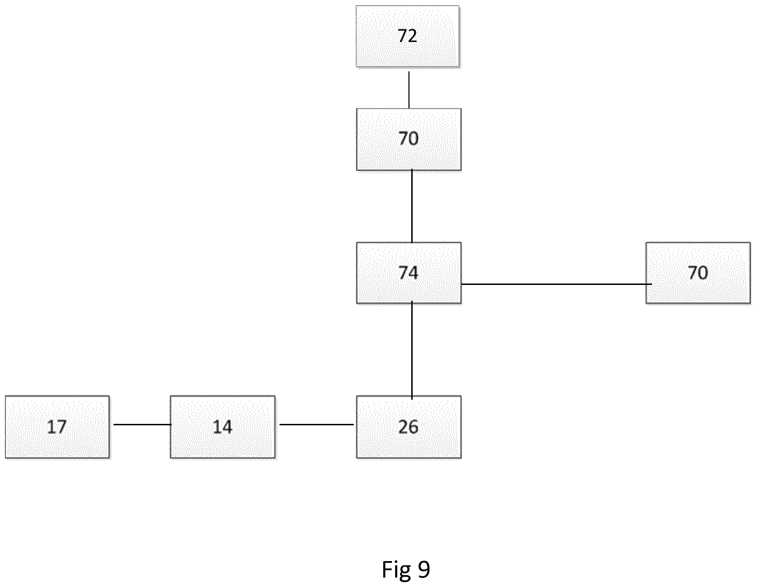

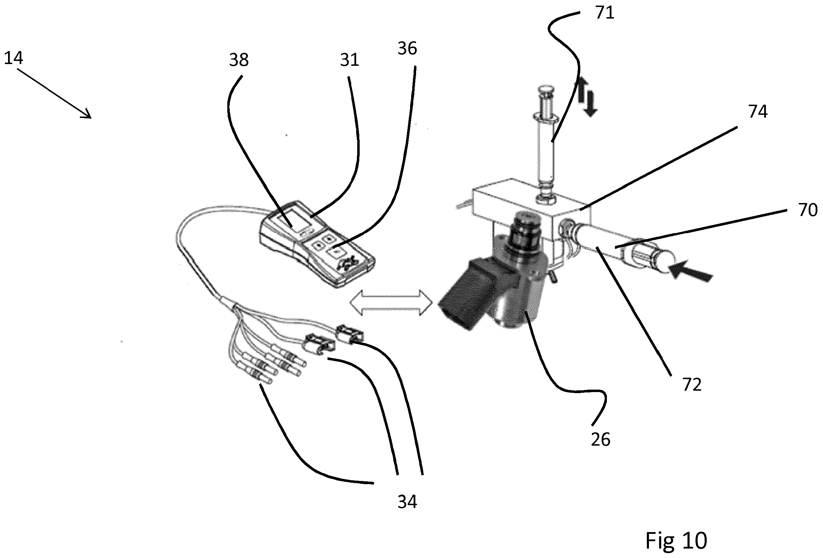

Le synoptique du cycle de mesures 18 comme décrit dans la figure 2 ne présente pas d'étape de nettoyage. Cette étape est une étape facultative qui peut être réalisée dès lors que l'on détecte pour l'électrovanne doseuse 26 un fonctionnement défectueux. Les figures 9 et 10 représentent le schéma fonctionnel et les composants du système de nettoyage. L'étape de nettoyage se déroule de la manière suivante :
d10) démonter la électrovanne doseuse 26 du système d'injection de carburant 12, et puis la positionner et la fixer sur l'embase 74,
d20) injecter un solvant de nettoyage 72 dans une première seringue 70,
d30) connecter l'électrovanne doseuse 26 à l'unité de commande 14 et sélectionner à l'écran 38 le mode « nettoyage » afin d'activer le piston de l'électrovanne doseuse 26 par salve,
d40) purger l'électrovanne doseuse 26 avec la première seringue 70 contenant le solvant de nettoyage 72,
d50) laisser agir le solvant de nettoyage 72 dans l'électrovanne doseuse 26 pendant 20 à 40 mn,
d60) purger une seconde fois l'électrovanne doseuse 26 avec le solvant de nettoyage 72,
d70) activer le piston de l'électrovanne doseuse 26 avec l'unité de commande 14 et vérifier que le coulissement du piston dans la chambre de l'électrovanne doseuse 26 n'émet pas de bruit aigu, le solvant de nettoyage 72 est refoulé dans une deuxième seringue 71,
d80) purger l'électrovanne doseuse 26 avec un liquide IS04113,
d80) démonter l'électrovanne doseuse 26 de son embase 74,
d90) remonter la électrovanne doseuse 26 sur la pompe haute pression 28. Comme décrit dans les figures 9 et 10, le montage de l'équipement pour le nettoyage de l'électrovanne doseuse 26 comprend l'unité de commande 14, le support 74, la première seringue 70, la deuxième seringue 71 et le solvant de nettoyage 72. Le montage de l'ensemble se fait de la manière suivante. Tout d'abord l'opérateur démonte l'électrovanne doseuse 26 de la pompe haute pression 28 par exemple. Puis il fixe l'électrovanne doseuse 26 sur un support 74. L'opérateur va prendre la première seringue 70 comprenant le solvant de nettoyage 72 et va la fixer à une bouche d'entrée du support 74. L'opérateur va connecter l'unité de commande 14 à l'électrovanne doseuse 26 à l'aide d'un connecteur 34 spécifique à l'électrovanne doseuse 26. L'activation du piston de l'électrovanne doseuse 26 va alors refouler le solvant de nettoyage 72 dans la deuxième seringue 71.

L'opérateur utilise lors des opérations de maintenance un kit de maintenance 76 qui comprend l'unité de commande 14, l'unité hydraulique 16 et au moins un adaptateur spécifique 68. Le terme kit définit un ensemble de pièces détachées constitutives d'un objet, vendues avec un plan de montage, et que l'on assemble soi-même. Dans notre cas ce sera un kit de maintenance à l'usage des opérateurs de maintenance. De plus un kit de nettoyage 80 peut aussi être ajouté au kit de maintenance 76. Le kit de nettoyage 80 comprend le fluide de nettoyage 72, au moins les deux seringues 70, 71, le support 74 adapté pour être agencé complémentairement sur l'électrovanne doseuse 26.

Les références suivantes ont été utilisées dans la description:
- 10: système de maintenance
- 12: système d'injection de carburant
- 14: unité de commande
- 16: unité hydraulique
- 17: batterie
- 18: cycle de mesures
- 20: mesure électrique
- 22: électrovanne
- 24: capteur de pression
- 26: électrovanne doseuse
- 28: pompe haute pression
- 31: boitier
- 32: câble électrique
- 34: connecteur
- 36: bouton
- 38: écran
- 40: électrovanne de test
- 42: capteur de pression de test
- 44: corps de l'unité hydraulique
- 46: bouche d'entrée du corps
- 48: bouche de sortie du corps
- 50: bouche de fuite du corps
- 52: récipient de carburant de l'unité hydraulique
- 54: démarreur du véhicule à vérifier
- 56: rampe commune
- 58: calculateur ou ECU
- 60: injecteur
- 62: outil de diagnostic ou OBD
- 64: récipient de carburant relié à un injecteur
- 66: récipient de carburant relié à l'électrovanne
- 68: adaptateur spécifique
- 70: première seringue
- 71: deuxième seringue
- 72: fluide de nettoyage
- 74: support
- 76: kit de maintenance
- 80: kit de nettoyage
- A: étape de la mesure électrique
- B: étape de la mesure de pression
- C: étape de la mesure de débit et de la pression

## Revendications

1. Système de maintenance (10) d'un système d'injection de carburant (12) équipant un moteur de combustion interne, le système d'injection de carburant (12) définissant un circuit hydraulique comprenant une pompe haute pression (28), une électrovanne (22), un capteur de pression (24), une électrovanne doseuse (26), une rampe commune (56) et des injecteurs (60),
**caractérisé en ce que** le système de maintenance (10) comprend une unité de commande manuelle (14) reliée à une unité hydraulique (16), l'unité hydraulique (16) pouvant être insérée dans le circuit hydraulique du système d'injection de carburant (12) et comprenant une électrovanne de test (40) et un capteur de pression de test (42) montés dans un corps (44) pourvu d'une bouche d'entrée (46), d'une bouche de sortie (48) et d'une bouche de fuite (50) de sorte qu'en utilisation l'électrovanne de test (40) génère une fuite artificielle comprise entre un volume de fuite de carburant minimum et un volume de fuite maximum, le capteur de pression de test (42) mesurant la pression dans le corps (44) de l'unité hydraulique et générant un signal indicatif de la valeur de pression lue, ledit signal étant envoyé à l'unité de commande manuelle (14).

2. Système de maintenance (10) selon la revendication précédente, dans lequel l'unité de commande (14) manuelle comprend un boitier (31), au moins trois câbles électriques (32) terminés chacun par un connecteur (34) spécifique apte à être connecté sur l'électrovanne (22) du système d'injection et sur l'électrovanne doseuse (26) du système d'injection,
**caractérisé en ce que** le système de maintenance (10) mesure les résistances électriques de l'électrovanne (22) et de l'électrovanne doseuse (26).

3. Système de maintenance (10) selon la revendication 2 dans lequel l'unité de commande (14) manuelle est prévue pour exécuter plusieurs opérations selon un cycle de mesures (18) qui comprend des mesures électriques et des mesures hydrauliques.

4. Système de maintenance (10) selon l'une quelconque des revendication 1 à 3 dans lequel le cycle de mesures (18) sélectionné s'interrompt au terme de chacune des opérations du cycle de mesures (18), l'opération suivante étant déclenchée par une action sur un bouton (36) du boitier de sorte que le cycle de mesures (18) sélectionné puisse être interrompu dès qu'une mesure a permis d'identifier un défaut du système d'injection de carburant (12).

5. Système de maintenance (10) selon une des revendications 1 à 4, le système de maintenance (10) étant déplaçable et portable d'une main, facilement manipulable et utilisable de sorte à être emmené par un opérateur auprès d'un véhicule dont un le système d'injection de carburant (10) doit être vérifié.

6. Système de maintenance (20) selon une quelconque des revendications 1 à 5 dans lequel un adaptateur spécifique (68) est connecté au bout de la bouche d'entrée (46) ou de la bouche de sortie (48) du corps (44), l'adaptateur spécifique (68) peut être déconnecté et remplacé par un autre adaptateur spécifique (68) à un autre actionneur (22, 26) ou à une autre pompe haute pression (28), de sorte qu'une même unité de commande (14) puisse être utilisée pour la maintenance d'une pluralité de système d'injection de carburant (12).

7. Kit de maintenance (76) du système d'injection de carburant (12) pilotés par un unité de commande (14) manuelle et prévus pour équiper des moteurs diesel ou essence, le kit (76) comprenant un système de maintenance (10) selon la revendication 6 et au moins un adaptateur spécifique (68) supplémentaire de sorte que l'unité de commande (14) puisse être utilisée avec au moins deux modèles différents de système d'injection de carburant (12).

8. Kit de maintenance (76) selon la revendication 7 comprenant de plus un kit de nettoyage (80) ayant un fluide de nettoyage (72), au moins deux seringues (70,71), un support (74) adapté pour être agencé complémentairement sur l'électrovanne doseuse (26).

9. Méthode du système de maintenance (10) d'un système d'injection de carburant (12) piloté par l'unité de commande (14) manuelle équipant un moteur à combustion interne, la méthode du système de maintenance (10) selon la revendication 6 comprenant les étapes :
- connecter l'unité de commande (14) manuelle à l'unité hydraulique (16), à la pompe haute pression (28) et aux actionneurs (22,26) et au capteur de pression (24) du système d'injection de carburant (12);
- réaliser la mesure électrique (20) de l'électrovanne (22) et de l'électrovanne doseuse (26),
- réaliser la mesure de pression de la pompe haute pression (28) et la mesure du débit et de pression du système d'injection de carburant (12),
**caractérisé en ce que** les étapes s'enchaînent selon un cycle de mesures (18) déterminé, le système d'injection de carburant (12) restant en place sur le moteur à combustion interne.

10. Méthode (82) selon la revendication 9 comprenant en outre une étape de nettoyage de l'électrovanne doseuse (26) au cours de laquelle le fluide de nettoyage (72) circule dans l'électrovanne doseuse (26).

## Patentansprüche

1. Wartungssystem (10) für ein Kraftstoffeinspritzsystem (12) eines Verbrennungsmotors, wobei das Kraftstoffeinspritzsystem (12) einen Hydraulikkreislauf definiert, der eine Hochdruckpumpe (28), ein Magnetventil (22), einen Drucksensor (24), ein elektromagnetisches Dosierventil (26), ein Common Rail (56) und Injektoren (60) enthält,
**dadurch gekennzeichnet, dass** das Wartungssystem (10) eine manuelle Steuereinheit (14) aufweist, die mit einer Hydraulikeinheit (16) verbunden ist, wobei die Hydraulikeinheit (16) in den Hydraulikkreislauf des Kraftstoffeinspritzsystems (12) eingesetzt werden kann und ein elektromagnetisches Testventil (40) und einen Testdrucksensor (42) enthält, die in einem Körper (44) montiert sind, der mit einer Einlassöffnung (46), einer Auslassöffnung (48) und einer Leckageöffnung (50) versehen ist, so dass im Betrieb das elektromagnetische Testventil (40) eine künstliche Leckage zwischen einem minimalen Kraftstoffleckagevolumen und einem maximalen Leckagevolumen erzeugt, wobei der Testdrucksensor (42) den Druck im Körper (44) der Hydraulikeinheit misst und ein Signal erzeugt, das den abgelesenen Druckwert anzeigt, wobei das Signal an die manuelle Steuereinheit (14) gesendet wird.

2. Wartungssystem (10) nach dem vorhergehenden Anspruch,
wobei die manuelle Steuereinheit (14) ein Gehäuse (31) und mindestens drei elektrische Kabel (32) enthält, die jeweils mit einem spezifischen Verbinder (34) enden, der geeignet ist, mit dem Magnetventil (22) des Einspritzsystems und mit dem elektromagnetischem Dosierventil (26) des Einspritzsystems verbunden zu werden,
**dadurch gekennzeichnet, dass**
das Wartungssystem (10) die elektrischen Widerstände des Magnetventils (22) und des elektromagnetischen Dosierventils (26) misst.

3. Wartungssystem (10) nach Anspruch 2,
wobei die manuelle Steuereinheit (14) dazu vorgesehen ist, mehrere Vorgänge gemäß einem Messzyklus (18) durchzuführen, der elektrische Messungen und hydraulische Messungen umfasst.

4. Wartungssystem (10) nach einem der Ansprüche 1 bis 3,
wobei der gewählte Messzyklus (18) am Ende jedes der Vorgänge des Messzyklus (18) unterbrochen wird, wobei der nächste Vorgang durch eine Betätigung einer Taste (36) des Gehäuses ausgelöst wird, so dass der gewählte Messzyklus (18) unterbrochen werden kann, sobald mit einer Messung ein Fehler im Kraftstoffeinspritzsystem (12) identifiziert worden ist.

5. Wartungssystem (10) nach einem der Ansprüche 1 bis 4,
wobei das Wartungssystem (10) beweglich und mit einer Hand tragbar, leicht zu handhaben und zu bedienen ist, so dass es von einem Bediener zu einem Fahrzeug gebracht werden kann, dessen Kraftstoffeinspritzsystem (10) überprüft werden soll.

6. Wartungssystem (20) nach einem der Ansprüche 1 bis 5,
wobei ein spezifischer Adapter (68) mit dem Ende der Einlassöffnung (46) oder der Auslassöffnung (48) des Körpers (44) verbunden ist, wobei der spezifische Adapter (68) abgetrennt und durch einen anderen spezifischen Adapter (68) zu einem anderen Betätigungsglied (22, 26) oder einer anderen Hochdruckpumpe (28) ersetzt werden kann, so dass eine gleiche Steuereinheit (14) für die Wartung einer Vielzahl von Kraftstoffeinspritzsystemen (12) verwendet werden kann.

7. Wartungssatz (76) für das Kraftstoffeinspritzsystem (12), das über eine manuelle Steuereinheit (14) angesteuert wird und zum Ausrüsten von Diesel- oder Benzinmotoren vorgesehen ist, wobei der Satz (76) ein Wartungssystem (10) nach Anspruch 6 und mindestens einen zusätzlichen spezifischen Adapter (68) enthält, so dass die Steuereinheit (14) mit mindestens zwei verschiedenen Modellen des Kraftstoffeinspritzsystems (12) verwendet werden kann.

8. Wartungssatz (76) nach Anspruch 7, ferner enthaltend einen Reinigungssatz (80) mit einer Reinigungsflüssigkeit (72), mindestens zwei Spritzen (70, 71) und einem Halter (74), der komplementär auf das elektromagnetische Dosierventil (26) angeordnet werden kann.

9. Verfahren für das Wartungssystem (10) eines Kraftstoffeinspritzsystems (12), das über die manuelle Steuereinheit (14) angesteuert wird und mit dem ein Verbrennungsmotor ausgerüstet ist, wobei das Verfahren für das Wartungssystem (10) nach Anspruch 6 die folgenden Schritte umfasst:
- Verbinden der manuellen Steuereinheit (14) mit der Hydraulikeinheit (16), der Hochdruckpumpe (28) und den Betätigungsgliedern (22, 26) sowie dem Drucksensor (24) des Kraftstoffeinspritzsystems (12);
- Durchführen der elektrischen Messung (20) des Magnetventils (22) und des elektromagnetischen Dosierventils (26),
- Durchführen der Druckmessung der Hochdruckpumpe (28) und der Durchfluss- und Druckmessung des Kraftstoffeinspritzsystems (12), **dadurch gekennzeichnet, dass**
die Schritte gemäß einem bestimmten Messzyklus (18) aufeinanderfolgen, wobei das Kraftstoffeinspritzsystem (12) am Verbrennungsmotor verbleibt.

10. Verfahren (82) nach Anspruch 9, ferner umfassend einen Schritt des Reinigens des elektromagnetischen Dosierventils (26), während dessen das Reinigungsfluid (72) durch das elektromagnetische Dosierventil (26) fließt.

## Claims

1. A maintenance system (10) for a fuel injection system (12) equipping an internal combustion engine, the fuel injection system (12) defining a hydraulic circuit including a high-pressure pump (28), a solenoid valve (22), a pressure sensor (24), a metering solenoid valve (26), a common rail (56) and injectors (60), **characterized in that** the maintenance system (10) includes a manual control unit (14) connected to a hydraulic unit (16), the hydraulic unit (16) being able to be inserted into the hydraulic circuit of the fuel injection system (12) and including a test solenoid valve (40) and a test pressure sensor (42) mounted in a body (44) having an inlet port (46), an outlet port (48) and a leakage port (50) so that in use the test solenoid valve (40) generates an artificial leak between a minimum fuel leakage volume and a maximum leakage volume inclusive, the test pressure sensor (42) measuring the pressure in the body (44) of the hydraulic unit and generating a signal indicating the read pressure value, said signal being sent to the manual control unit (14).

2. The maintenance system (10) as claimed in the preceding claim, in which the manual control unit (14) includes a control box (31), at least three electric cables (32) each terminated by a specific connector (34) adapted to be connected to the solenoid valve (22) of the injection system and to the metering solenoid valve (26) of the injection system,
**characterized in that** the maintenance system (10) measures the electrical resistances of the solenoid valve (22) and the metering solenoid valve (26).

3. The maintenance system (10) as claimed in claim 2 in which the manual control unit (14) is adapted to execute a plurality of operations in accordance with a measurement cycle (18) that includes electrical measurements and hydraulic measurements.

4. The maintenance system (10) as claimed in any one of claims 1 to 3, in which the selected measurement cycle (18) is interrupted at the end of each of the operations of the measurement cycle (18), the next operation being triggered by action on a button (36) of the control box so that the selected measurement cycle (18) can be interrupted as soon as a measurement has enabled identification of a fault of the fuel injection system (12).

5. The maintenance system (10) as claimed in any one of claims 1 to 4, the maintenance system (10) being mobile and can be carried in one hand, easily manipulatable and usable so as to be brought by an operative near a vehicle the fuel injection system (10) of which has to be verified.

6. The maintenance system (20) as claimed in any one of claims 1 to 5 in which a specific adapter (68) is connected to the end of the inlet port (46) or the outlet port (48) of the body (44), the specific adapter (68) being disconnectable and replaceable by another adapter (68) specific to another actuator (22, 26) or to another high-pressure pump (28) so that the same control unit (14) can be used to maintain a plurality of fuel injection systems (12).

7. A maintenance kit (76) of the fuel injection system (12) controlled by a manual control unit (14) and designed to equip diesel or petrol engines, the kit (76) including a maintenance system (10) as claimed in claim 6 and at least one supplementary specific adapter (68) so that the control unit (14) can be used with a least two different models of the fuel injection system (12).

8. The maintenance kit (76) as claimed in claim 7 further including a cleaning kit (80) using a cleaning fluid (72), at least two syringes (70, 71), a support (74) adapted to be arranged in a complementary manner on the metering solenoid valve (26).

9. A method of using the system (10) for maintaining a fuel injection system (12) equipping an internal combustion controlled by the manual control unit (14), the maintenance system (10) claim 6 including the steps of:
- connecting the manual control unit (14) to the hydraulic unit (16), to the high-pressure pump (28) and to the actuators (22, 26) and to the pressure sensor (24) of the fuel injection system (12) ;
- carrying out the electrical measurement (20) of the solenoid valve (22) and of the metering solenoid valve (26),
- measuring the pressure of the high-pressure pump (28) and measuring the flow rate and the pressure of the fuel injection system (12),
**characterized in that** the steps are strung together in accordance with a particular measurement cycle (18), the fuel injection system (12) remaining in place on the internal combustion engine.

10. The method (82) as claimed in claim 9 further including a step of cleaning the metering solenoid valve (26) during which the cleaning fluid (72) circulates in the metering solenoid valve (26).
